# EUROPÄISCHE PATENTSCHRIFT

(11) **EP 0 537 763 B1**
(45) Veröffentlichungstag und Bekanntmachung des Hinweises auf die Patenterteilung: **09.06.1999**
(21) Anmeldenummer: 92117718.4
(22) Anmeldetag: 16.10.1992
(51) Int. Cl.: G01N 21/73, G01N 21/71, G01N 1/00

(54) **Probenzuführungssystem zur Zuführung von Probenmaterial zum Plasma eines ICP-AES-Spektrometers**
Sample delivery system for delivering sample material to the plasma of an ICP-AES spectrometer
Système pour amener un échantillon à un plasma d'un spectromètre du type ICP AES

(30) Priorität: 18.10.1991 DE 4134512
(43) Veröffentlichungstag der Anmeldung: 21.04.1993
(73) Patentinhaber: FORSCHUNGSZENTRUM JÜLICH GMBH, 52425 Jülich (DE)
(72) Erfinder: Zadgorska, Zdravka, Dr., W-5170 Jülich (DE); Nickel, Hubertus, Prof., W-5170 Jülich (DE)

(56) Entgegenhaltungen:
- EP-A- 0 135 097
- DE-A- 3 422 946
- DE-A- 3 424 696
- GB-A- 2 098 324
- US-A- 3 138 330
- ANALYTICAL CHEMISTRY.A Bd. 59, Nr. 23, Dezember 1987, COLUMBUS US Seiten 1345A - 1354A MEYER 'icp still the panacea for metal traces analysis'
- APPLIED SPECTROSCOPY. Bd. 44, Nr. 1, Januar 1990, BALTIMORE US Seiten 21 - 24 SMITH 'evaluation of current nebulizers'
- Meyers Lexikon Technik und exakte Naturwissenschaften, Mannheim 1970, Seiten 2189, 2795

## Beschreibung

Die Erfindung bezieht sich auf ein Probenzuführungssystem eines Atomemissions-Spektrometers mit den Merkmalen des Oberbegriffs von Anspruch 1. Ein solches Probenzuführungssystem ist aus der Druckschrift DE 34 22 946 A1 bekannt.

Die Atomemissionsspektroskopie (AES) mit induktiv gekoppeltem Plasma (ICP: Inductively Coupled Plasma) bietet gegenüber der klassischen AES den Vorteil, daß infolge der Einführung von festen, pulverförmigen Proben in das Plasma die mit dem vorherigen chemischen Aufschluß zwangsläufig auftretenden Verunreinigungen der Proben, z.B. durch die benutzten Chemikalien, vermieden werden können. Vermieden wird außerdem der mit dem chemischen Aufschluß verbundene hohe zeitliche und apparative Aufwand. Eine Verbesserung gegenüber der klassischen AES besteht auch darin, daß eine Verminderung der Empfindlichkeit infolge Verdünnung der Proben nicnt mehr in Kauf genommen werden muß.

Bisher bekannte Verfahren der Probenzuführung in das ICP-Plasma sind jedoch trotz der genannten Vorteile gegenüber der klassischen AES noch immer nicht ausreichend effektiv, da Probenverluste beim Einführen in das Plasma bisher nicht vermieden werden konnten.
So wurden pulverförmige Proben beispielsweise durch den Einsatz eines mechanisch betriebenen Tiegelliftes in das Plasma befördert (s. hierzu Appl. Sp. Vol. 40, Nr. 3, 1986, S. 387). Dabei wird bei jeder Analyse ein Graphittiegel verbraucht. Dieser Tiegel samt Lift führt zu einer Störung des Plasmas. Außerdem besteht die Gefahr der Carbidbildung des Probenmaterials innerhalb des heißen Plasmas, was den Nachteil einer Verminderung der Nachweisgrenze bewirkt.

Im Bericht "Thermal Vaporisation for Inductively Coupled Plasma Optical Emission Spectrometry" von Matusiewicz in Journal of Analytical Atomic Spectrometry, Juni 1986, Vol. 1 wird daher auf die besondere Bedeutung der Zuführungssysteme, d.h. dem Interface zwischen der Probenquelle und dem Plasma auch hingewiesen, ohne daß hierfür allerdings eine zufriedenstellende Lösung angegeben wird.

Aus DE 34 24 696 A1 ist eine Vorrichtung zur Zuführung von Analysensubstanz in ein Plasma bekannt, bei der durch ein konisches Übergangsteil mit hieran angeschlossenem Zentralrohr hindurch eine verdampfende Substanz mittels eines Schutzgasstromes in ein Plasma transportiert wird. Das konische Übergangsteil fördert Verwirbelungen der verdampfenden Substanz mit dem Schutzgas. So gelangt im Zentralrohr befindliche Substanz an die Rohrwand und kann sich dort abscheiden. Die Abscheidung führt zu nachteilhaften Probenverlusten.

Aus DE 34 22 946 A1 ist ein Probenzuführungssystem bekannt, bei der eine in einem Vorratsbehälter befindliche Suspension über ein Ansaugrohr, einen Zerstäuber und eine Metallkapillare mittels eines Trägergases in ein Plasma transportiert wird. Der Zerstäuber dient der Zerstäubung der angesaugten Suspension mit dem Trägergas, so daß eine homogenisierte Feststoffsuspension entsteht. Im Anschluß gelangt die zerstäubte Suspension in die Metallkapillare. In der Metallkapillare kontaktiert daher die zerstäubte Suspension ohne weiteres die Metallwand und scheidet sich hier entsprechend ab. Nachteilhaft müssen diese Abscheidungen als Probenverluste hingenommen werden.

Aus der GB 20 98 324 ist eine Vorrichtung bekannt, bei der eine Kapillare (a) in ein größeres Kapillarrohr (b) mit Gaszufuhr einmündet, wobei das an der Einmündung entlangströmende Gas eine an der Einmündung der Kapillare (a) austretende Substanz in den Gasstrom der Kapillare (b) mitreißt und es zu einer Vermischung kommt.

Es ist Aufgabe der Erfindung, eine Vorrichtung der eingangs bezeichneten Art zu schaffen, die eine höhere Effektivität der Zuführung ces Probenmaterials zum Plasma ermöglicht als die bisher bekannten Vorrichtungen. Auf den Einsatz komplizierter und mechanisch bewegter Zusatzeinrichtungen sollte dabei verzichtet werden.

Diese Aufgabe wird durch eine Vorrichtung gemäß dem kennzeichnenden Teil des Anspruchs gelöst.

Ein Probenbehälter, der zur Aufnahme der Probe eine sacklochförmige Aussparung aufweist, wird von unten in eine Ausnehmung eines Zwischenteils, welches sich zwischen dem Probenbehälter und dem Zentralrohr des Brenners befindet, eingesetzt. Das Zwischenteil weist einen Strömungskanal auf, der zusammen mit der Aussparung einen durchgehenden und gegen die Atmosphäre abgeschlossenen Kanal bildet. Dieser Kanal mündet am oberen Ende des Zwischenteils in das untere Ende des Zentralrohrs. Der Durchmesser des Kanals ist im gesamten Verlauf kleiner als der Innendurchmesser des Zentralrohrs und stimmt am unteren Ende des Zwischenteils mit dem Durchmesser am oberen Ende des Probenbehälters überein. Die Achsen der Aussparung des Probenbehälters, des strömungskanals in dem Zwischenteil und des Zentralrohrs fallen zusammen. Die Trägergaszuführung, die an eine Gaszuleitung anschließbar ist, umgibt ringförmig den im oberen Teil des Zwischenteils gelegenen Teil des Strömungskanals. Ab der Einmündung wird ein Trägergasstrom derart von unten in das Zentralrohr eingeleitet, daß er den von der Einmündung nach oben um die Mittelachse des Zentralrohres sich erstreckenden Bereich umhüllt. An der Einmündung wird dadurch ein Unterdruck erzeugt, so daß das in Pulverform oder als Schmelze und damit zum Teil in Dampfform vorliegende Probenmaterial angesaugt und nach oben dosiert in das Plasma geführt wird.

Das umhüllende Gas, das beispielsweise Argon sein kann, strömt aus der Trägergaszuführung, wenn deren Einmündung in das Zentralrohr als Düse ausgebildet ist, mit erhöhter Geschwindigkeit und erzeugt so - in Abhängigkeit vom Durchsatz den Unterdruck entsprechend den Bedingungen der Bernoulli'schen Gleichung. Hieraus resultiert die Saugwirkung auf das Probenmaterial, das - bei geschmolzenem Probenmaterial - in Dampfform oder - bei pulverförmigem Probenmaterial - als Pulver entlang der Mittelachse nach oben zum Plasma mitgeführt wird.

Die Menge an mitgeführtem Probenmaterial kann durch Einstellung des Gasdruckes und/oder des Gasdurchsatzes gesteuert werden.

Mittels der anspruchsgemäßen Vorrichtung wird somit erreicht, daß Probenmaterial ohne Verunreinigung zum Piasma gelangt. Hinzu kommt, daß durch das umhüllende Gas ein Abscheiden des Probenmaterials an der Innenwand des Zentralrohres auf dem Weg zum Plasma, d.h., daß ein Verlust an Probenmaterial, verhindert wird.

Bei einer zweckmäßigen Ausführungsform des Probenzuführungssystems liegt die Öffnung bzw. liegen die Öffnungen der Gasführung auf gleicher Ebene wie die Einmündung des Probenbehälters. Auch ist es vorteilhaft, daß die Öffnung der Gasführung als Ringdüse ausgebildet ist. Dadurch ist mit Sicherheit gewährleistet, daß das zugeführte Gas den Strom des Probenmaterials umhüllt.

Ein Ausführungsbeispiel des Probenzuführungssystems ist in der Zeichnung dargestellt und wird im folgenden näher erläutert:

Es zeigen
- Figur 1: eine Ausführungsform des Probenzuführungssystemms mit Graphittiegel als Probenbehälter im Längsschnitt;
- Figur 2: eine Ausführungsform des Probenzuführungssystems mit ungeheiztem Probenbehälter im Längsschnitt.

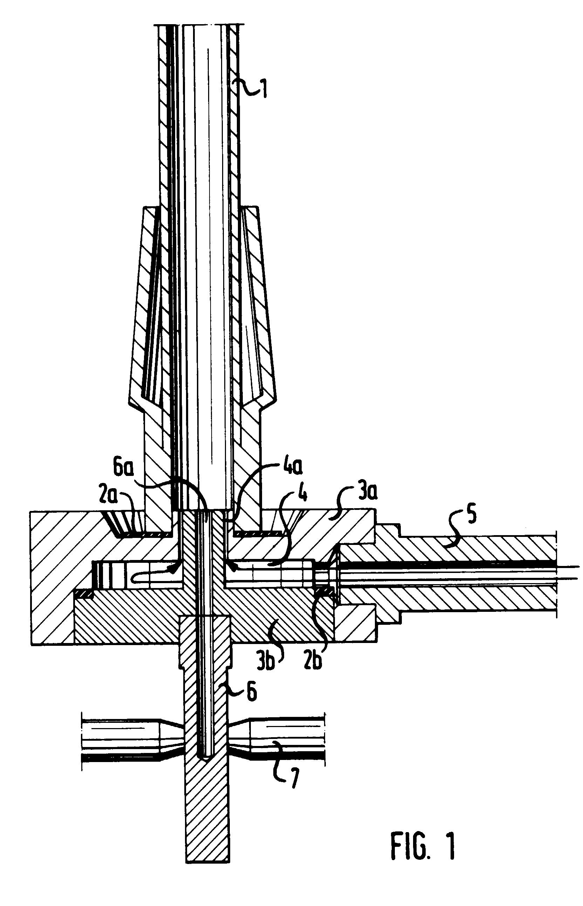

Wie aus der Zeichnung hervorgeht, ist das Probenzuführungssystem mit dem Zentralrohr 1 des in der Zeichnung nicht dargestellten Brenners über die Dichtung 2a verbunden. Das Probenzuführungssystem weist zwei Teile 3a und 3b mit der Dichtung 2b auf, zwischen denen sich die Gasführung 4 befindet. Diese mündet einerseits in die Ringdüse 4a, andererseits ist sie an die Gaszuführungsleitung 5 angeschlossen. Über diese wird beispielsweise Argon - der Pfeilrichtung folgend - über die Ringdüse in das Zentralrohr 1 eingespeist, in dem es den Bereich oberhalb der Einmündung des Probenbehälters umhüllt (in Figur 1 durch Schattierung dargestellt).

Bei der in Figur 1 dargestellten Ausführungsform ist der Probenbehälter ein Graphittiegel 6, der über Elektroden 7 aufgeheizt wird. Er mündet über die hohlzylindrische Aussparung 6a im Teil 3b in das Zentralrohr 1.

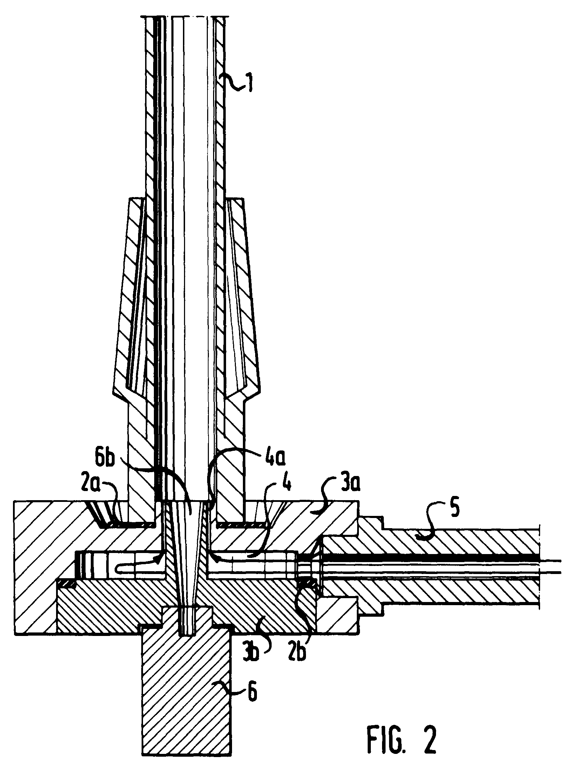

Bei der in Figur 2 dargestellten Ausführungsform mündet der Probenbehälter 6 über eine konische Aussparung 6b im Teil 3b in das Zentralrohr.

## Patentansprüche

1. Probenzuführungssystem für ein Atomemissionsspektrometer mit einem induktiv gekoppelten Plasmabrenner mit
a) einem Probenbehälter (6),
b) einem oberhalb des Probenbenälters angeordneten vertikalen Zentralrohr (1) des Plasmabrenners zur Zuführung des Probenmaterials und des Trägergases zum Plasmabrenner,
c) einem Zwischenteil (3a, 3b) zwischen dem Probenbehälter und dem Zentralrohr, wobei das Zwischenteil einen Strömungskanal (6a, 6b) aufweist und die Achsen des Stömungskanals und des Zentralrohrs zusammenfallen,
d) einer Trägergaszuführung (4), die am stromaufwärts gelegenen Ende an eine Gaszuleitung (5) anschließbar ist, die gegen die Atmosphäre abgeschlossen ist, die im stromabwärts gelegenen Teil den oberen Teil des Zwischenteils mit dem stromabwärts gelegenen Teil des Strömungskanals ringförmig umgibt und die am stromabwärts gelegenen Ende als Düse (4a) in das untere Ende des Zentralrohrs mündet, so daß im Betrieb der von dieser Düse ausgehende Trägergasstrom den sich von der Düse nach oben um die Achse des Zentralrohres erstreckenden Bereich ringförmig umhüllt,
dadurch gekennzeichnet, daß
e) der Prcbenbehälter von unten in eine Ausnehmung des Zwischenteils einsetzbar ist,
f) der Probenbehälter eine zur Probenaufnahme dienende sacklochartige Aussparung aufweist,
g) die Aussparung und der Strömungskanal einen durchgehenden und gegen die Atmosphäre abgeschlossenen Kanal bilden, der am oberen Ende des Zwischenteils in das untere Ende des Zentralrohrs mündet, dessen Durchmesser im gesamten Verlauf kleiner ist als der Innendurchmesser des Zentralrohrs und dessen Durchmesser am unteren Ende des Zwischenteils mit dessen Durchmesser am oberen Ende des Probenbehälters übereinstimmt, und
h) die Achsen der Aussparung des Probenbehälters, des Strömungskanals und des Zentralrohrs zusammenfallen.

## Claims

1. Sample delivery system for an atom emission spectrometer with inductively coupled plasma torch, comprising
a: a sample container (6);
b: a vertical central pipe (1) of the plasma torch arranged above the sample container for ducting the sample material and the carrier gas to the plasma torch;
c: an intermediate member (3a, 3b) between the sample container and the central pipe, and the intermediate member comprises a flow channel (6a, 6b), and the axes of the flow channel and the central pipe coincide;
d: a carrier gas feed (4) which is at the upstream end connectabie to a gas delivery pipe (5), which is sealed from the atmosphere and which in the downstream part annularly surrounds the upper part of the intermediate member with the downstream part of the flow channel and which terminates at the downstream end as a nozzle (4a) in the lower end of the central pipe, so that during operation the carrier gas flow, which originates from said nozzle, annularly encases the area which extends from the nozzle upwards around the axis of the central pipe,
**characterised in that**
e: tne sample container is insertible from below into a recess of the intermediate member;
f: the sample container comprises a pockethoie cutout which serves to receive samples;
g: the cutout and the flow channel establish a continuous channel which is sealed from the atmosphere and which terminates at the upper end of the intermediate member into the lower end of the central pipe, the diameter of which is over the full extent smaller than the inside diameter of the central pipe and the diameter of which coincides at the lower end of the intermediate member with its diameter at the upper end of the sample container; and
h: the axes of the cutout of the sample container, the flow channel and the central pipe coincide.

## Revendications

1. Système d'introduction d'échantillons pour un spectromètre d'émission atomique comprenant une torche à plasma induite par haute fréquence comprenant :
a) un récipient (6) à échantillon,
b) un tube (1) central vertical de la torche à plasma qui est disposé au-dessus du récipient à échantillon et qui est destiné à envoyer le matériau d'échantillon et le gaz porteur à la torche à plasma,
c) une partie (3a, 3b) intermédiaire entre le récipient à échantillon et le tube central, la partie intermédiaire comportant un canal (6a, 6b) d'écoulement et les axes du canal d'écoulement et du tube central coïncidant,
d) un conduit (4) d'introduction de gaz porteur qui peut être raccordé à l'extrémité se trouvant en amont à un conduit (5) pour du gaz, qui est fermé par rapport à l'atmosphère, qui, à la partie se trouvant en aval, entoure annulairement le tronçon supérieur de la partie intermédiaire ayant la partie du canal d'écoulement qui se trouve en aval et qui, à l'extrémité se trouvant en aval, débouche sous la forme de buse (4a) dans l'extrémité inférieure du tube central, de sorte qu'en fonctionnement, le courant de gaz porteur sortant de cette buse entoure annulairement la partie s'étendant de la buse vers le haut autour de l'axe du tube central,
caractérisé en ce que
e) le récipient à échantillon peut être placé par le bas dans un évidement de la partie intermédiaire,
f) le récipient à échantillon comporte une cavité en forme de trou borgne servant à la réception de l'échantillon,
g) la cavité et le canal d'écoulement forment un canal continu et fermé vis-à-vis de l'atmosphère qui débouche à l'extrémité supérieure de la partie intermédiaire dans l'extrémité inférieure du tube central, dont le diamètre est dans l'ensemble plus petit que le diamètre intérieur du tube central et dont le diamètre à l'extrémité inférieure de la partie intermédiaire coïncide avec son diamètre à l'extrémité supérieure du récipient à échantillon, et
h) les axes de la cavité du récipient à échantillon du canal d'écoulement et du tube central coïncident.
